# EUROPÄISCHE PATENTSCHRIFT

(11) **EP 2 052 369 B1**
(45) Veröffentlichungstag und Bekanntmachung des Hinweises auf die Patenterteilung: **10.09.2014**
(21) Anmeldenummer: 07786299.3
(22) Anmeldetag: 24.07.2007
(51) Int. Cl.: G07D 11/00

(54) **SENSOR UND VORRICHTUNG ZUR PRÜFUNG VON BLATTGUT UND VERFAHREN ZUR SENSOR-VORJUSTAGE**
SENSOR AND APPARATUS FOR CHECKING PAPER GOODS, AND METHOD FOR SENSOR PREALIGNMENT
CAPTEUR ET DISPOSITIF DE CONTRÔLE D'UN PRODUIT EN FEUILLE ET PROCÉDÉ DE TRANSLATION DE CAPTEURS

(30) Priorität: 27.07.2006 DE 102006034783
(43) Veröffentlichungstag der Anmeldung: 29.04.2009
(73) Patentinhaber: Giesecke & Devrient GmbH, 81667 München (DE)
(72) Erfinder: HÄUSLER, August, 82515 Wolfratshausen (DE)
(86) Internationale Anmeldenummer: PCT/EP2007/006573
(87) Internationale Veröffentlichungsnummer: WO 2008/012068

(56) Entgegenhaltungen:
- EP-A- 0 631 120
- WO-A-03/031904
- DE-A1- 4 103 832
- DE-A1- 4 227 735
- DE-A1- 4 402 347
- DE-A1- 10 329 587
- DE-A1- 19 517 294
- DE-C1- 3 242 789
- GB-A- 2 090 685
- US-A1- 2004 251 110

## Beschreibung

Die Erfindung betrifft einen Sensor zur Prüfung von Blattgut, wie z.B. Banknoten, bei dem gegenüberliegende Sensorkomponenten genau aufeinander ausgerichtet sind. Außerdem betrifft die Erfindung eine Vorrichtung zur Prüfung von Blattgut, bei der derartige Sensoren Anwendung finden, sowie ein Verfahren zur Vorjustage derartiger Sensoren.

Aus der DE 32 42 789 C1 ist eine Vorrichtung zur Prüfung von Blattgut mit mehreren Sensoren entlang einer Sensorstrecke bekannt, entlang der die Banknoten transportiert werden. Die Sensoren weisen jeweils zwei Komponenten auf, die auf gegenüberliegenden Seiten der Banknoten-Transportstrecke angeordnet sind. Die jeweils auf einer Seite der Transportstrecke angeordneten Komponenten verschiedener Sensoren sind gemeinsam auf einer Aufnahmeplatte befestigt, wobei eine der Aufnahmeplatten drehbar gelagert ist, um die Sensorstrecke z.B. zu Wartungszwecken freilegen zu können. Zur Befestigung können die beiden Aufnahmeplatten, auf denen sich gegenüberliegende Sensorkomponenten befinden, beispielsweise über ein Gelenk miteinander verbunden sein. Neben dem mechanischen Spiel im Gelenk weisen auch die Befestigungsteile der Aufnahmeplatten und die beiden Aufnahmeplatten Toleranzen auf. Aufgrund der Toleranzen gelingt es im Allgemeinen nicht, die die Sensorkomponenten tragenden Oberseiten der beiden Aufnahmeplatten genau auszurichten. Auch beim Kippen einer der Aufnahmeplatten, beispielsweise zum Freilegen der Sensorstrecke, aus der Betriebsposition heraus und anschließend wieder zurück, gelingt es im Allgemeinen nicht, diese wieder in der exakt gleichen Position anzuordnen. Stattdessen wird eine geringfügig veränderte Betriebsposition der Aufnahmeplatte und damit der Sensorkomponenten erreicht. Die relative Position gegenüberliegender, auf verschiedenen Aufnahmeplatten angebrachter Komponenten eines Sensors ist daher einer Schwankung unterworfen, die zur Dejustage der beiden Komponenten führen und die Funktion des Sensors beeinträchtigen kann.

Die US 2004/0 251 110 A1 zeigt eine Vorrichtung zur Positionierung gegenüberliegender Sensorkomponenten.

Es ist daher eine Aufgabe der Erfindung, eine verbesserte Genauigkeit und Reproduzierbarkeit der Ausrichtung gegenüberliegender Sensorkomponenten zu erzielen.

Diese Aufgabe wird durch die Merkmale der unabhängigen Ansprüche gelöst. In davon abhängigen Ansprüchen sind vorteilhafte Ausgestaltungen und Weiterbildungen der Erfindung angegeben.

Die Lösung der Aufgabe wird durch den Einsatz von Andockelementen erreicht, welche zur exakten Ausrichtung gegenüberliegender Sensorkomponenten verwendet werden. Die Ausrichtung erfolgt so, dass die einander gegenüberliegenden Sensorkomponenten einen funktionsfähigen Sensor bilden. Insbesondere werden die innerhalb der Sensorkomponenten angeordneten Messelemente so aufeinander ausgerichtet, dass ein von einer der Sensorkomponenten ausgesendetes Messsignal durch den Spalt zwischen den Sensorkomponenten (und gegebenenfalls durch das im Spalt transportierte Blattgut), dringt und von einer gegenüberliegenden Sensorkomponente erfasst werden kann. Um die relative Position gegenüberliegender Sensorkomponenten exakt und reproduzierbar festzulegen, sind die Sensorkomponenten mit Andockelementen ausgestattet, die jeweils aus mindestens zwei Teilelementen bestehen. An jeder der auszurichtenden Sensorkomponenten ist mindestens ein Teilelement angeordnet, dem an der gegenüberliegenden Sensorkomponente als Gegenstück ein anderes Teilelement zugeordnet ist. Durch die Berührung der entsprechenden Teilelemente mehrerer Andockelemente wird eine exakte relative Position der Sensorelemente definiert, die auch nach mechanischer Einwirkung von außen, z.B. durch Erschütterungen oder Temperaturdrift von Befestigungsteilen der Sensorkomponenten, exakt wieder herstellbar ist. Die Stellen, an denen sich die Teilelemente berühren bzw. an denen sie sich kontaktieren, sind durch die Wahl bestimmter Oberflächenformen der Teilelemente vorbestimmt. Das heißt, die Lage und die Fläche der Kontaktstellen der Teilelemente werden kontrolliert und kommen nicht zufällig zustande, wie es etwa aufgrund von Toleranzen beliebig ausgewählter Oberflächen im Allgemeinen der Fall wäre.

Um die relative Position einander gegenüberliegender Sensorkomponenten zu fixieren und die Berührung der Teilelemente stabil zu halten, wird eine Andruckkraft angelegt, die die auszurichtenden gegenüberliegenden Sensorkomponenten aneinander drückt und in aufeinander ausgerichteter relativer Position hält. Die Andruckkraft wird an das Gehäuse einer oder beider Sensorkomponenten - vorzugsweise von der dem Blattgut abgewandten Seite - beispielsweise in der Richtung parallel zu einer gemeinsamen Sensorachse angelegt. Alternativ kann die Andruckkraft auch an eine Aufnahmeplatte, auf der eine oder mehrere Sensorkomponenten angeordnet sind, angelegt werden. Die an eine Sensorkomponente angelegte Andruckkraft kann sowohl senkrecht als auch in einer von der Senkrechten abweichenden Richtung zur Frontebene der Sensorkomponente und/ oder zu einer Ebene der Mittelpunkte der Teilelemente einer Sensorkomponente und/oder zur Ebene der Berührpunkte der Andockelemente angelegt werden. Die Richtung der angelegten Andruckkraft schneidet die jeweilige Ebene vorzugsweise innerhalb eines gedachten Dreiecks, das zumindest drei dieser Teilelemente verbindet. Im angedockten Zustand wird die Andruckkraft beispielsweise so an eine der Sensorkomponenten angelegt, dass die Richtung der Andruckkraft in das Dreieck weist, das die Mittelpunkte der drei Teilelemente einer Sensorkomponente verbindet. Die Richtung der Andruckkraft kann z.B. so gewählt werden, dass an jedem der Andockelemente ein bestimmter Mindestanteil der Andruckkraft anliegt, vorzugsweise liegt an jedem der Andockelemente etwa der gleiche Anteil der Andruckkraft an.

Die Teilelemente der Andockelemente können an den Gehäusen der gegenüberliegenden Sensorkomponenten befestigt sein, in denen die Messelemente der Sensorkomponente eingekapselt sind. Alternativ können die Teilelemente auch an einer (oder an mehreren) Aufnahmevorrichtung(en) auf der (denen) eine oder mehrere Sensorkomponenten angeordnet sind, befestigt sein oder sie können auch an einem oder an mehreren Messelementen der Sensorkomponenten befestigt sein. Die Teilelemente der Andockelemente können von der Sensorkomponente bzw. von der Aufnahmevorrichtung bzw. von dem Messelement abnehmbar sein oder auch permanent damit verbunden. Alternativ können die Teilelemente auch feste Bestandteile des Gehäuses der jeweiligen Sensorkomponente bzw. der Aufnahmevorrichtung bzw. des Messelements sein, d.h. in das Sensorkomponenten-Gehäuse bzw. in die Aufnahmevorrichtung bzw. in das Messelement integriert sein. So können zum Beispiel an der Oberfläche des Gehäuses der Sensorkomponente bzw. der Aufnahmevorrichtung bzw. des Messelements bestimmte Stellen vorgesehen sein, an denen der Kontakt zu einem entsprechenden Teilelement der gegenüberliegenden Sensorkomponente, insbesondere zu den entsprechenden Stellen des Gehäuses der gegenüberliegenden Sensorkomponente bzw. der Aufnahmevorrichtung bzw. des Messelements hergestellt wird. Diese Stellen können z.B. vorgesehene Vertiefungen oder Erhebungen sein, die mit entsprechenden Teilelementen der gegenüberliegenden Sensorkomponente, die als Gegenstücke wirken, zusammenpassen.

Ferner sind auch die Andockelemente selbst so ausgebildet, dass die relative Position und die Ausrichtung gegenüberliegender Sensorkomponenten durch die Andruckkraft stabil gehalten werden kann. Dabei spielen sowohl die Anzahl der Andockelemente, als auch deren Anordnung und Befestigung sowie das Material und die Form der sich berührenden Teilelemente eine wichtige Rolle.

Vorzugsweise sind die Andockelemente so gestaltet, dass die relative Position der Sensorkomponenten nicht überbestimmt ist. Im Fall einer Überbestimmtheit würde sich die relative Position gegenüberliegender Sensorkomponenten nur ungenau einstellen lassen, da die unvermeidbaren Fertigungstoleranzen der mechanischen Teile, an denen eine Ausrichtung stattfinden soll, im Allgemeinen mehrere, geringfügig verschiedene relative Positionen zulassen. Auch bei hoher Fertigungsgenauigkeit kann diese Ungenauigkeit - beispielsweise nach mechanischer Einwirkung von außen - bereits zu einer Dejustage des Sensors führen. Eine Maßnahme, um eine Überbestimmtheit auszuschließen, besteht darin, genau drei Andockelemente zu verwenden, die jeweils geeignet geformte Teilelemente aufweisen. Die zur gegenseitigen Berührung vorgesehenen Teilelemente werden jeweils an den entsprechenden Positionen an den gegenüberliegenden Sensorkomponenten angeordnet. Die Teilelemente sind an ihren für die gegenseitige Berührung vorgesehenen Oberflächen so ausgebildet, dass die relative Position der Sensorkomponenten nicht überbestimmt ist.

Durch die Wahl genau dreier Andockelemente ist die relative Position der Sensorkomponenten bezüglich einer Translationsbewegung senkrecht zur Frontebene der Sensorkomponenten eindeutig festgelegt. Die Teilelemente sind an ihren zur Berührung vorgesehenen Oberflächen außerdem beispielsweise mit folgenden Formen ausgestattet: Jeweils ein Teilelement jedes der drei Andockelemente besitzt eine konvexe bzw. nach außen gewölbte Form, wie z.B. die Form einer Kugel. Die drei Gegenstück-Teilelemente weisen jedoch unterschiedliche Formen auf, um folgende Funktionen erfüllen zu können: Durch das Gegenstück-Teilelement eines der Andockelemente wird lediglich einer der drei Anschläge in Bezug auf eine Translationsbewegung senkrecht zur Frontebene der Sensorkomponenten bereitgestellt. Das Gegenstück-Teilelement eines weiteren Andockelements ist so beschaffen, dass durch das betreffende Andockelement sowohl der zweite Anschlag als auch ein Drehpunkt festgelegt wird, um den die Sensorkomponenten relativ zueinander in der Frontebene der Sensorkomponenten gedreht werden könnten. Das Gegenstück-Teilelement eines weiteren Andockelements liefert den dritten Anschlag und bestimmt die relative Orientierung der Sensorkomponenten, und zwar bezüglich der Drehung in der Frontebene der Sensorkomponenten um den eben genannten Drehpunkt. Im angedockten Zustand ist dann weder eine Translations- noch eine Rotationsbewegung der beiden Sensorkomponenten relativ zueinander möglich. Die Sensorkomponenten lassen sich auf diese Weise spielfrei zueinander positionieren.

Um die relative Position der Sensorkomponenten möglichst genau zu definieren, ist es außerdem vorteilhaft, die drei Andockelemente in der Ebene der Sensorfronten möglichst weit voneinander entfernt anzuordnen. Vorzugsweise erfolgt die Berührung zweier als Gegenstücke vorgesehener Teilelemente an möglichst kleinen Berührflächen, damit das Auftreten von Abrieb und Schmutzanlagerung vermieden wird.

Im Hinblick auf die Wartung der Sensoren ist es vorteilhaft, dass die Sensorkomponenten bereits vor deren Auslieferung so vorjustiert werden, dass ein beim Kunden im Betrieb stehender Sensor nach dem Ersetzen einer seiner Sensorkomponenten nicht erneut justiert werden muss. Zu dieser Vorjustage wird vorzugsweise eine erste Sensorkomponente fest mit einer Justagevorrichtung verbunden. Eine zweite Sensorkomponente wird anschließend in die durch die Andockelemente vorgegebene relative Position zur ersten Sensorkomponente gebracht und dort mit Hilfe der Andruckkraft fixiert. Zur exakten Ausrichtung der beiden Sensorkomponenten werden dann die Messelemente der beiden Sensorkomponenten so aufeinander ausgerichtet, dass der Sensor optimal funktionieren kann. Nach Durchführung der Vorjustage entspricht die relative Position der gegenüberliegenden Sensorkomponenten, die durch die Andockelemente vorgegeben ist, einer aufeinander ausgerichteten Position der Messelemente gegenüberliegender Sensorkomponenten. Damit geben die Andockelemente die ausgerichtete relative Position gegenüberliegender Sensorkomponenten vor. Auf diese Weise können die für eine einander gegenüberliegende Anordnung vorgesehenen Sensorkomponenten bereits vor ihrer Auslieferung in Bezug auf ihre relative Position vorjustiert werden. Auf eine erste Sensorkomponente, die auf der Justagevorrichtung angeordnet ist, können vorteilhaft mehrere zweite Sensorkomponenten ausgerichtet bzw. vorjustiert werden. Zusätzlich können auch weitere erste Sensorkomponenten vorjustiert werden, so dass beliebige vorjustierte erste und beliebige vorjustierte zweite Sensorkomponenten ohne weitere Justage zu einem funktionsfähigen Sensor kombiniert werden können.

Nach der Vorjustage können die vorjustierten Sensorkomponenten, die zusammen einen Sensor bilden, in einer Vorrichtung zur Prüfung von Blattgut, verwendet werden. Vorzugsweise werden mehrere vorjustierte Sensorkomponenten bereitgehalten, die jeweils einzeln austauschbar sind. Vorteilhaft lassen sich dabei auch einzelne Sensorkomponenten eines Sensors austauschen und - ohne die Notwendigkeit einer erneuten Justage - durch einzelne andere vorjustierte Sensorkomponente ersetzen. Durch die vorjustierten und maschinenübergreifend austauschbaren Sensorkomponenten können Sensoren oder Sensorkomponenten mit geringem Aufwand ersetzt werden, wobei der Betrieb der Vorrichtung nur kurzzeitig unterbrochen werden muss.

Die Sensorkomponenten der erfindungsgemäßen Sensoren können Teile verschiedenartiger Sensoren sein, so z.B. mechanischer Sensoren, magnetischer Sensoren, kapazitiver Sensoren, von Photosensoren im UV, VIS oder IR oder von Ultraschallsensoren.

Das Blattgut, zu dessen Prüfung der erfindungsgemäße Sensor verwendet werden kann, sind beispielsweise Banknoten, Wertdokumente, Tickets oder ähnliches. Die Vorrichtung zur Prüfung von Blattgut ist beispielsweise eine Banknotenbearbeitungsmaschine.

Nachfolgend wird die Erfindung anhand der begleitenden Zeichnungen beispielhaft beschrieben.

Es zeigen:
- Fig. 1a: einen Schnitt durch eine Justiervorrichtung, auf deren Oberseite beispielhaft zwei Sensorkomponenten angeordnet sind, die aufeinander ausgerichtet werden,
- Fig. 1b: einen Schnitt durch zwei Aufnahmeplatten, auf deren Oberseite beispielhaft jeweils eine Sensorkomponente angeordnet ist, die aufeinander mit Hilfe von Andockelementen ausgerichtet werden,
- Fig. 2a,b: einen Schnitt (Figur 2a) durch zwei miteinander in Berührung stehende Teilelemente eines ersten Andockelements sowie eine Frontalansicht (Figur 2b) des Teilelements mit ebener Oberfläche,
- Fig. 3a,b: einen Schnitt (Figur 3a) durch zwei miteinander in Berührung stehende Teilelemente eines zweiten Andockelements sowie eine Frontalansicht (Figur 3b) des hohlprismenförmigen Teilelements,
- Fig. 4a,b: einen Schnitt (Figur 4a) durch zwei miteinander in Berührung stehende Teilelemente eines dritten Andockelements sowie eine Frontalansicht (Figur 4b) des hohlkegelförmigen Teilelements,
- Fig. 5: eine räumliche Ansicht zweier Sensorkomponenten, von denen eine aus der Betriebsposition herausgekippt ist, mit drei beispielhaft angeordneten Andockelementen; die Teilelemente der Andockelemente sind lediglich schematisch gezeigt,
- Fig. 6a,b: eine räumliche Ansicht dreier zur Hälfte aufgeschnittener Andockelemente vor dem Andocken (Figur 6a) und im angedockten Zustand (Figur 6b).

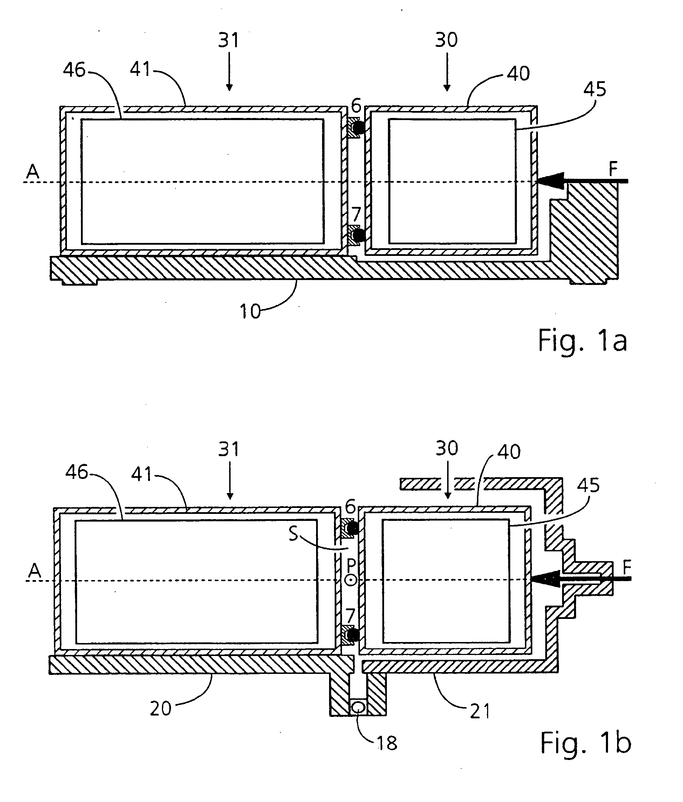

Ein Sensor besteht beispielsweise aus zwei gegenüberliegenden Sensorkomponenten 30,31, zwischen denen ein Spalt S vorgesehen ist, in dem der Transport des Blattguts (in Richtung P senkrecht aus der Zeichenebene heraus) erfolgt, vgl. Figur 1b. Die zwei gegenüberliegenden Sensorkomponenten 30, 31 weisen jeweils ein Gehäuse 40, 41 und im jeweiligen Gehäuse angeordnete Messelemente 45, 46 (in den Figuren 1a, 1b lediglich schematisch gezeigt) auf. Zur Festlegung der relative Position der Sensorkomponenten 30, 31 sind an den Sensorkomponenten 30, 31 mehrere Andockelemente 5 (nicht gezeigt), 6 und 7 angebracht, die jeweils aus zwei Teilelementen bestehen. An der Sensorkomponente 30 ist pro Andockelement jeweils ein Teilelement angeordnet, dem an der gegenüberliegenden Sensorkomponente 31 als Gegenstück jeweils ein anderes Teilelement zugeordnet ist. Durch die Berührung der einander entsprechenden Teilelemente mehrerer Andockelemente wird eine exakte relative Position der Sensorkomponenten 30, 31 definiert. Die Teilelemente der Andockelemente 5, 6, 7 sind in dem gezeigten Beispiel an den Gehäusen 40,41 der gegenüberliegenden Sensorkomponenten 30, 31 befestigt.

Eine Andruckkraft F, die die auszurichtenden gegenüberliegenden Sensorkomponenten 30, 31 aneinander drückt und in aufeinander ausgerichteter Position hält, wird von der dem Blattgut abgewandten Seite an das Gehäuse 40 der Sensorkomponente 30 - zum Beispiel in der Richtung parallel zur gemeinsamen Sensorachse A - angelegt, vgl. Figuren 1a, 1b.

Damit die gegenüberliegenden Sensorkomponenten 30,31 einen funktionsfähigen Sensor bilden, werden die Messelemente 45, 46 der Sensorkomponenten 30, 31 auf einer Justagevorrichtung 10 genau aufeinander ausgerichtet, vgl. Figur 1a. Zu den Messelementen 45, 46 gehören im Fall eines optischen Sensors beispielsweise Lichtquellen, Photodetektoren, Dispersionselemente, Fenster oder Linsen. Die Ausrichtung aufeinander erfolgt insbesondere so, dass ein von einer der Sensorkomponenten ausgesendetes Messsignal durch den Spalt zwischen den Sensorkomponenten 30,31 und gegebenenfalls durch das transportierte Blattgut dringen und von der gegenüberliegenden Sensorkomponente erfasst werden kann. Zur Vorjustage der Sensorkomponenten wird vorzugsweise eine Sensorkomponente 31 fest mit der Justagevorrichtung 10 verbunden und die weitere Sensorkomponente 30 zunächst mit Hilfe der Justagevorrichtung 10 vorpositioniert. Die Sensorkomponente 30 wird anschließend an die durch die Andockelemente 5, 6, 7 vorgegebene Position gebracht und dort mit Hilfe der Andruckkraft F fixiert. Nachdem die Ausrichtung der Messelemente 45,46 durchgeführt ist, entspricht die relative Position der gegenüberliegenden Sensorkomponenten 30, 31, die durch die Andockelemente 5, 6, 7 vorgegeben ist, einer aufeinander ausgerichteten Position der Messelemente 45, 46 der Sensorkomponenten 30, 31. Damit geben die Andockelemente 5, 6, 7 die ausgerichtete relative Position gegenüberliegender Sensorkomponenten 30,31 vor, welche auf diese Weise vorjustiert werden.

Figur 1b zeigt einen Ausschnitt einer Vorrichtung zur Prüfung von Blattgut, wie z.B. eine Banknotenbearbeitungsmaschine, mit zwei Sensorkomponenten 30, 31, die jeweils auf einer Aufnahmeplatte 20, 21 angeordnet sind. Die Aufnahmeplatten 20, 21 sind über ein Gelenk 18 kippbar miteinander verbunden. Die Aufnahmeplatte 21 wird jedoch nur zur Vorpositionierung der Sensorkomponente 30 verwendet. Wie bei der Justiervorrichtung wird die Sensorkomponente 30 anschließend an die durch die Andockelemente vorgegebene Position gebracht und dort mit Hilfe der Andruckkraft F fixiert. Aufgrund der Vorjustage und der Positionierung an den Andockelementen 5, 6, 7 ergibt sich eine aufeinander ausgerichtete relative Position der gegenüberliegenden Sensorkomponenten 30, 31, die damit einen funktionsfähigen Sensor bilden. Die vorjustierten Sensorkomponenten sind - ohne erneute Justage in Bezug auf bereits eingebaute Sensorkomponenten - maschinenübergreifend austauschbar.

Um die Überbestimmtheit der relativen Position der Sensorkomponenten auszuschließen, werden genau drei Andockelemente 5, 6, 7 mit jeweils zwei geeignet geformten Teilelementen verwendet. Durch die spezielle Ausbildung der Oberfläche der Teilelemente werden die Berührpunkte bzw. Berührflächen der Teilelemente vorbestimmt. Damit lässt sich sicherstellen, dass die Sensorkomponenten 30, 31 - bei angelegter Andruckkraft F- relativ zueinander weder eine Translations- noch eine Rotationsbewegung ausführen können und deren relative Position nicht überbestimmt ist. Im angedockten Zustand sind die Sensorkomponenten 30, 31 dann im Idealfall absolut spielfrei zueinander positioniert.

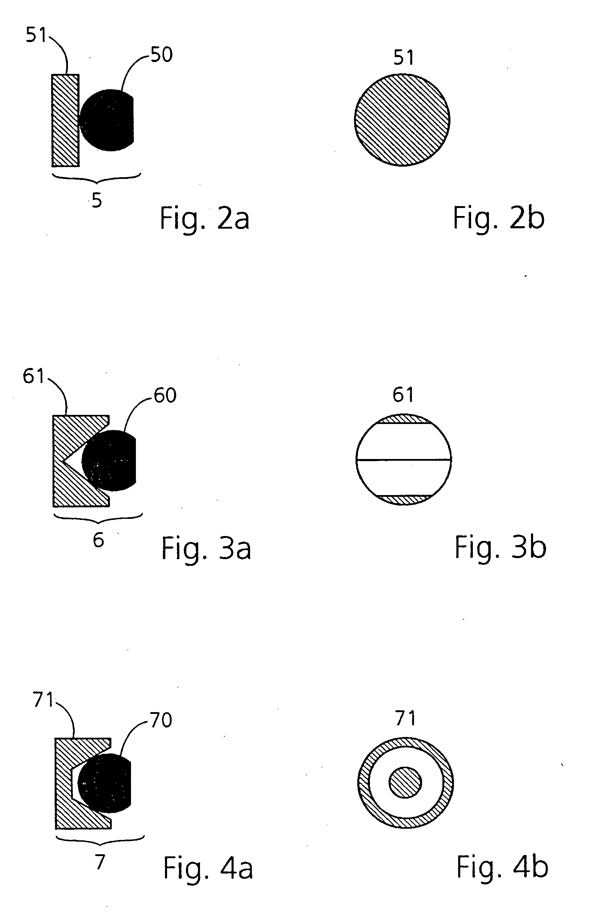

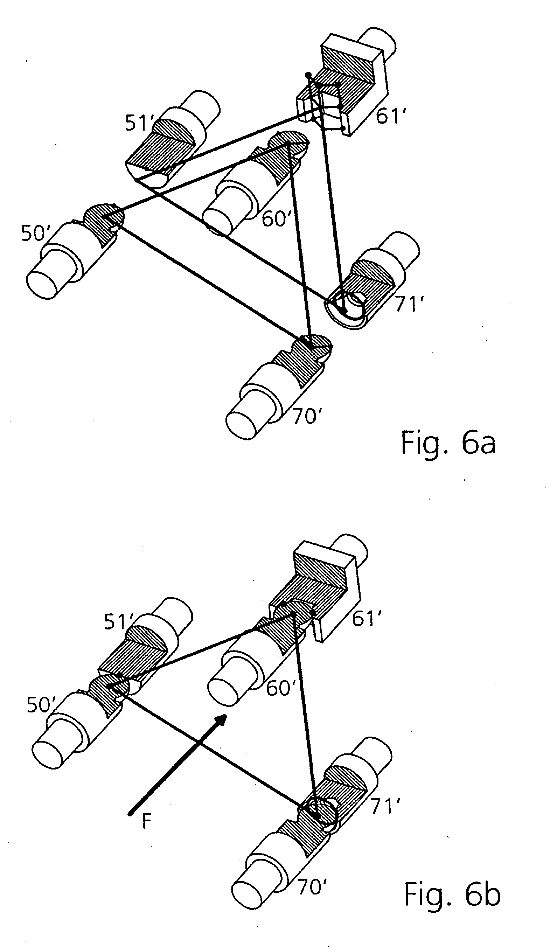

Beispielsweise besitzt jeweils ein Teilelement jedes der drei Andockelemente 5,6,7 eine konvexe bzw. nach außen gewölbte Form, während die drei Gegenstück-Teilelemente unterschiedliche Formen aufweisen, vgl. Figuren 2, 3, 4 und 6. Eine konkrete Lösung besteht zum Beispiel in folgenden Realisierungen der drei Andockelemente 5, 6, 7:
a) Das konvexe Teilelement 50 oder 50' des ersten Andockelements 5 hat an seiner Oberfläche die Form einer Kugel. Das jeweils als Gegenstück vorgesehene Teilelement 51, 51' weist eine ebene Oberfläche auf. Die beiden ersten Teilelemente 50 und 51 bzw. 50' und 51' berühren sich - im Idealfall - nur an einem Punkt, in der Praxis an einer näherungsweise punktförmigen Fläche (vgl. Figuren 2a,b, 6a,b).
b) Das konvexe Teilelement 60 oder 60' des zweiten Andockelements 6 kann wahlweise als Kugel ausgebildet sein oder auch als eine Kugel, die an ihrer (dem Teilelement 61 bzw. 61' zugewandten) Frontseite abgeflacht ist. Das jeweils als Gegenstück vorgesehene Teilelement 61, 61' weist an seiner Oberfläche zwei Flächen auf, die gegenüber der Frontebene der Sensorkomponente geneigt sind, vgl. Figuren 3a,b, 6a,b. Die beiden Flächen sind z.B. als v-förmige Nut in das Teilelement 61 eingesenkt und bilden - zumindest Teilflächen von - zwei Seiten eines dreiecksförmigen Hohlprismas, dessen Spitze in Richtung der Sensorkomponente weist, auf der das Teilelement 61 angeordnet ist. Statt dem Teilelement 61 kann auch ein Teilelement 61' verwendet werden, das die Form eines dreiecksförmigen Hohlprismas mit abgeschnittener Spitze aufweist, vgl. Figuren 6a,b. Die beiden zweiten Teilelemente 60 und 61 bzw. 60' und 61' berühren sich - im Idealfall - jeweils an zwei Punkten, in der Praxis an zwei näherungsweise punktförmigen Flächen. Im Fall eines abgeflachten kugelförmigen Teilelements 60, 60' ist sicherzustellen, dass die beiden Berührpunkte in dessen kugelförmigem Bereich liegen.
c) Das konvexe Teilelement 70 oder 70' des dritten Andockelements 7 kann ebenfalls wahlweise als Kugel ausgebildet sein oder auch als eine Kugel, die an ihrer (dem Teilelement 71 bzw. 71' zugewandten) Frontseite abgeflacht ist. Das jeweils als Gegenstück vorgesehene Teilelement 71, 71' weist an seiner Oberfläche die Form eines (an der Spitze abgeschnittenen) Hohlkegels auf, insbesondere einer Hohlkegel-Mantelfläche, vgl. Figuren 4a,b, 6a,b. Alternativ kann das Teilelement 71,71' auch die Form (der Mantelfläche) eines nicht abgeschnittenen Hohlkegels aufweisen. Die beiden dritten Teilelemente 70 und 70' bzw. 71 und 71' berühren sich- im Idealfall - an einem Kreis, in der Praxis an einer näherungsweise kreisförmigen Fläche (vgl. Figuren 6a,b). Im Fall eines abgeflachten kugelförmigen Teilelements 71, 71' ist sicherzustellen, dass die Berührfläche in dessen kugelförmigem Bereich liegt.

Zur Illustration der räumlichen Anordnung sind in Figur 6 die drei Andockelemente 5, 6, 7 mit den Teilelementen 50', 51', 60', 61', 70', 71' dargestellt, und zwar vor dem Andocken (Figur 6a) und im angedockten Zustand (Figur 6b). Außerdem sind in den Figuren 6a,b Dreiecke eingezeichnet, die sich beim Verbinden der Mittelpunkte der Teilelemente 50', 60', 70' bzw. der Teilelemente 51', 61', 71' ergeben, sowie einige Hilfslinien und die Berührpunkte bzw. Berührlinien der sich im angedockten Zustand jeweils berührenden Teilelemente. Im angedockten Zustand wird die Andruckkraft F beispielsweise so an die Sensorkomponente 30 mit den Teilelementen 50', 60', 70' angelegt, dass die Richtung der Andruckkraft F in das Dreieck weist, das die Mittelpunkte der Teilelemente 50', 60', 70' verbindet. Die Andruckkraft F kann sowohl senkrecht zur Ebene des Dreiecks als auch schräg dazu angelegt werden. Eine schräg angelegte Andruckkraft F kann z.B. bei entsprechender Einbaulage der Sensorkomponenten unter dem Einfluss der Schwerkraft erforderlich sein.

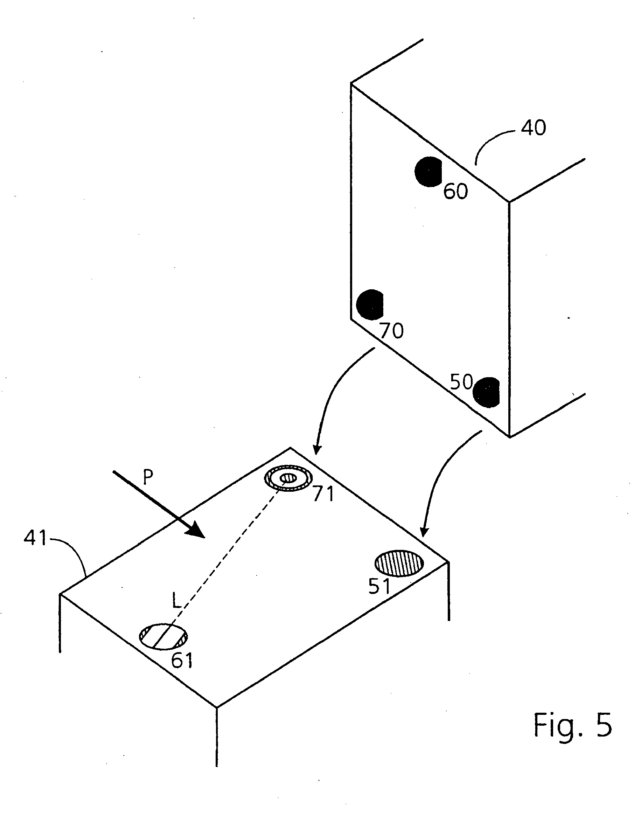

Die konvexen Teilelemente können, wie in Figur 5 gezeigt, beispielsweise auf einer und die Gegenstück-Teilelemente auf der dieser gegenüberliegenden Sensorkomponente angeordnet sein. Das konvexe und das jeweilige Gegenstück-Teilelement jedes einzelnen der Andockelemente 5, 6, 7 können jedoch auch miteinander vertauscht sein, d.h. auf der jeweils anderen Sensorkomponente angeordnet sein. Auf einer Sensorkomponente können also sowohl konvexe als auch Gegenstück-Teilelemente angeordnet sein.

Um die relative Position der Sensorkomponenten möglichst genau zu definieren, sollten die Andockelemente 5, 6, 7 innerhalb der Frontebene der jeweiligen Sensorkomponente möglichst weit voneinander entfernt angeordnet werden. Speziell sollte der Abstand zwischen dem Andockelement 6 mit dem hohlprismenförmigen Teilelement 61,61' und dem Andockelement 7 mit dem hohlkegelförmigen Teilelement 71,71' möglichst groß gewählt werden, um eine hohe Winkelgenauigkeit der Anordnung zu erzielen, vgl. Figur 5. Das heißt, dass sich damit eine hohe Genauigkeit in Bezug auf eine (geringfügige) relative Rotationsbewegung der Sensorkomponenten in der Frontebene der Sensorkomponenten (um das hohlkegelförmige Teilelement 71, 71' als Drehpunkt) erzielen lässt. Außerdem sollte die Orientierung der Nut des dreiecksförmigen Hohlprismas des Teilelements 61, 61' so gewählt werden, dass diese auf das Andockelement 7 mit dem hohlkegelförmigen Teilelement 71, 71' zeigt, vgl. die Richtung L in Figur 5. Auf diese Weise lässt sich die Winkelgenauigkeit noch weiter optimieren.

Es bleibt festzuhalten, dass die Genauigkeit, mit der die Teilelemente der Andockelemente 5, 6, 7 auf den Sensorkomponenten 30,31 anzuordnen sind, relativ unkritisch ist. Hier ist lediglich sicher zu stellen, dass die entsprechenden, für die gegenseitige Berührung vorgesehenen Teilelemente zugleich in Kontakt zueinander kommen können. Dabei ist eine Positioniergenauigkeit erforderlich, die sich aus der lateralen Ausdehnung der Teilelemente 51, 51', 61,61', 71, 71' (Ausdehnung gemessen in der Frontebene der Sensorkomponenten) ergibt. Beispielsweise würde es ausreichen, als Genauigkeit für den relativen Abstand der Teilelemente den halben lateralen Durchmesser der Teilelemente anzusetzen.

## Patentansprüche

1. Sensor zur Prüfung von Blattgut, insbesondere von Banknoten, mit mindestens zwei Sensorkomponenten (30, 31), die dazu vorgesehen sind, auf gegenüberliegenden Seiten einer für einen Transport des Blattguts vorgesehenen Transportstrecke angeordnet zu werden, wobei die relative Position mindestens zweier einander gegenüberliegender Sensorkomponenten (30, 31) durch mindestens ein Andockelement (5, 6, 7) so festgelegt ist, dass die gegenüberliegenden Sensorkomponenten (30, 31) aufeinander ausgerichtet sind, **dadurch gekennzeichnet,**
- **dass** die relative Position der einander gegenüberliegenden Sensorkomponenten (30, 31) durch drei, insbesondere drei unterschiedliche, Andockelemente (5, 6, 7) festgelegt ist, die jeweils aus mindestens zwei Teilelementen bestehen, die einander berühren, wobei an jeder der auszurichtenden Sensorkomponenten (30, 31) mindestens eines der Teilelemente angeordnet ist, dem an der gegenüberliegenden Sensorkomponente (30, 31) als Gegenstück ein anderes der Teilelemente zugeordnet ist, und
- **dass** die Mittelpunkte der drei Teilelemente, die an einer der Sensorkomponenten (30, 31) angeordnet sind, durch ein Dreieck verbindbar sind.

2. Sensor nach Anspruch 1, **dadurch gekennzeichnet, dass** die relative Position von mindestens zwei der einander gegenüberliegenden Sensorkomponenten (30, 31) durch die Andockelemente (5, 6, 7) so festgelegt ist, dass mindestens ein von einer der Sensorkomponenten (30, 31) ausgehendes Messsignal von mindestens einer auf diese ausgerichteten, gegenüberliegenden Sensorkomponente (30,31) erfasst werden kann.

3. Sensor nach einem oder mehreren der vorhergehenden Ansprüche, **dadurch gekennzeichnet, dass** die Andockelemente (5,6, 7) so ausgebildet sind, dass die relative Position mindestens zweier der einander gegenüberliegenden Sensorkomponenten (30,31) nicht überbestimmt und/ oder exakt reproduzierbar ist.

4. Sensor nach einem oder mehreren der vorhergehenden Ansprüche, **dadurch gekennzeichnet, dass** mindestens eines der Andockelemente (5, 6, 7) an den einander zugewandten Seiten mindestens zweier der einander gegenüberliegenden Sensorkomponenten (30, 31) angeordnet ist.

5. Sensor nach einem oder mehreren der vorhergehenden Ansprüche, **dadurch gekennzeichnet, dass** mindestens eines der Andockelemente (5, 6, 7) mindestens zwei Teilelemente (50, 51; 50', 51'; 60, 61; 60', 61'; 70, 71; 70', 71') aufweist, die einander nur an vorbestimmten Stellen berühren.

6. Sensor nach einem oder mehreren der vorhergehenden Ansprüche, **dadurch gekennzeichnet, dass** die einander gegenüberliegenden Sensorkomponenten (30, 31) durch eine angelegte Andruckkraft aufeinander ausgerichtet gehalten werden und dass mindestens zwei der einander berührenden Teilelemente (50,51; 50', 51'; 60, 61; 60', 61'; 70, 71; 70', 71') durch die Andruckkraft in Kontakt zueinander gehalten werden.

7. Sensor nach einem der vorhergehenden Ansprüche, **dadurch gekennzeichnet, dass** mindestens eines der einander berührenden Teilelemente (50, 50', 60, 60', 70, 70') an einer ersten Sensorkomponente (30) befestigt ist und mindestens ein weiteres der einander berührenden Teilelemente (51, 51', 61, 61', 71, 71') an einer zweiten Sensorkomponente (31) befestigt ist, die der ersten Sensorkomponente (30) gegenüberliegt.

8. Sensor nach einem oder mehreren der vorhergehenden Ansprüche, **dadurch gekennzeichnet, dass** mindestens ein erstes der sich berührenden Teilelemente (50, 50', 60, 60', 70, 70') an der für eine Berührung mit einem zweiten der sich berührenden Teilelemente (51, 51', 61, 61', 71, 71') vorgesehenen Seite eine nach außen gewölbte Oberfläche, insbesondere die Form einer Kugel oder einer abgeflachten Kugel, aufweist.

9. Sensor nach einem oder mehreren der vorhergehenden Ansprüche, **dadurch gekennzeichnet, dass** jedes der drei Andockelemente (5, 6, 7) ein erstes Teilelement aufweist, das an seiner Frontseite, die für eine Berührung mit einer Frontseite eines zweiten Teilelements des jeweiligen Andockelements (5, 6, 7) vorgesehen ist, eine nach außen gewölbte Oberfläche, insbesondere die Form einer Kugel, aufweist.

10. Sensor nach Anspruch 9, **dadurch gekennzeichnet, dass** das zweite Teilelement (51, 51') eines ersten der drei Andockelemente (5,6, 7) an seiner Frontseite eine ebene Oberfläche aufweist und das zweite Teilelement (71, 71') eines zweiten der drei Andockelemente (5, 6, 7) an seiner Frontseite die Form der Mantelfläche eines Hohlkegels oder eines abgeschnittenen Hohlkegels aufweist und das zweite Teilelement (61, 61') eines dritten der drei Andockelemente (5, 6, 7) an seiner Frontseite die Form eines Hohlprismas oder eines abgeschnittenen Hohlprismas aufweist.

11. Vorrichtung zur Prüfung von Blattgut mit mindestens einem Sensor nach einem oder mehreren der vorhergehenden Ansprüche.

12. Verfahren zur Vorjustage einer oder mehrerer Sensorkomponenten eines Sensors nach einem oder mehreren der Ansprüche 1 bis 10, **gekennzeichnet durch** folgende Schritte:
- Anordnen einer ersten Sensorkomponente (31) auf einer Justagevorrichtung (10),
- Positionieren einer zweiten Sensorkomponente (30) an der ersten Sensorkomponente (31) an einer **durch** die drei Andockelemente (5, 6, 7) vorgegebenen relativen Position der beiden Sensorkomponenten (30, 31),
- Ausrichten eines oder mehrerer Messelemente der zweiten Sensorkomponente (30) auf eines oder mehrere Messelemente der ersten Sensorkomponente (31), so dass die zweite Sensorkomponente (30) vorjustiert wird.

13. Verfahren zur Vorjustage nach Anspruch 12, **dadurch gekennzeichnet, dass** mehrere zweite Sensorkomponenten (30) mit Hilfe des Verfahrens auf die erste Sensorkomponente (31) vorjustiert werden, wobei die erste Sensorkomponente mit jeder beliebigen vorjustierten zweiten Sensorkomponente ohne weitere Justage zu einem funktionsfähigen Sensor kombiniert werden kann.

14. Verfahren zur Vorjustage nach einem oder mehreren der Ansprüche 12 bis 13, wobei zusätzlich zur Vorjustage der einen oder der mehreren zweiten Sensorkomponenten (30) weitere erste Sensorkomponenten (31) vorjustiert werden, mit folgenden Schritten:
- Anordnen einer zweiten Sensorkomponente (30) auf der oder auf einer weiteren Justagevorrichtung,
- Positionieren einer ersten Sensorkomponente (31) an der zweiten Sensorkomponente (30) an einer durch die Andockelemente (5, 6, 7) vorgegebenen relativen Position der beiden Sensorkomponenten (30, 31),
- Ausrichten eines oder mehrerer Messelemente der ersten Sensorkomponente (31) auf eines oder mehrere Messelemente der zweiten Sensorkomponente (30), so dass die erste Sensorkomponente (31) vorjustiert wird.

## Claims

1. A sensor for checking sheet material, in particular bank notes, having at least two sensor components (30, 31) which are provided for being arranged on opposing sides of a transport path provided for a transport of the sheet material, wherein the relative position of at least two sensor components (30, 31) opposing each other is defined by at least one docking element (5, 6, 7) such that the opposing sensor components (30, 31) are aligned with each other, **characterized in**
- **that** the relative position of the sensor components (30, 31) opposing each other is defined by three, in particular three different docking elements (5, 6, 7) which respectively consist of at least two partial elements which touch each other, wherein at each of the sensor components (30, 31) to be aligned there is arranged at least one of the partial elements which at the opposing sensor component (30, 31) has associated thereto another one of the partial elements as a counterpart, and
- **that** the central points of the three partial elements which are arranged at one of the sensor components (30, 31) are connectable by a triangle.

2. The sensor according to claim 1, **characterized in that** the relative position of at least two of the sensor components opposing each other (30, 31) is defined by the docking elements (5, 6, 7) such that at least one measuring signal emitted by one of the sensor components (30, 31) can be captured by at least one opposing sensor component (30, 31) aligned therewith.

3. The sensor according to one or several of the preceding claims, **characterized in that** the docking elements (5, 6, 7) are formed such that the relative position of at least two of the sensor components opposing each other (30, 31) is not over-determined and/or is exactly reproducible.

4. The sensor according to one or several of the preceding claims, **characterized in that** at least one of the docking elements (5, 6, 7) is arranged at the sides facing each other of at least two of the sensor components opposing each other (30, 31).

5. The sensor according to one or several of the preceding claims, **characterized in that** at least one of the docking elements (5, 6, 7) has at least two partial elements (50, 51; 50', 51'; 60, 61; 60', 61'; 70, 71; 70', 71') which touch each other only at predetermined places.

6. The sensor according to one or several of the preceding claims, **characterized in that** the sensor components (30, 31) opposing each other are held aligned with each other by an applied pressing force and that at least two of the partial elements touching each other (50, 51; 50', 51'; 60, 61; 60', 61'; 70, 71; 70', 71') are held in contact to each other by the pressing force.

7. The sensor according to any of the preceding claims, **characterized in that** at least one of the partial elements touching each other (50, 50', 60, 60', 70, 70') is mounted at a first sensor component (30) and at least one further of the partial elements touching each other (51, 51', 61, 61', 71, 71') is mounted at a second sensor component (31) which is located opposite the first sensor component (30).

8. The sensor according to one or several of the preceding claims, **characterized in that** at least a first of the partial elements touching each other (50, 50', 60, 60', 70, 70') has an outwardly bulged surface, in particular in the form of a sphere or a flattened sphere, at the side provided for touching a second of the partial elements touching each other (51, 51', 61, 61', 71, 71').

9. The sensor according to one or several of the preceding claims, **characterized in that** each of the three docking elements (5, 6, 7) has a first partial element which at its front side, which is provided for touching a front side of a second partial element of the respective docking element (5, 6, 7), has an outwardly bulged surface, in particular in the form of a sphere.

10. The sensor according to claim 9, **characterized in that** the second partial element (51, 51') of a first of the three docking elements (5, 6, 7) has at its front side a plane surface and the second partial element (71, 71') of a second of the three docking elements (5, 6, 7) has at its front side the form of the lateral surface of a hollow cone or of a cut off hollow cone and the second partial element (61, 61') of a third of the three docking elements (5, 6, 7) has at its front side the form of a hollow prism or of a cut off hollow prism.

11. An apparatus for checking sheet material having at least one sensor according to one or several of the preceding claims.

12. A method for the pre-adjustment of one or several sensor components of a sensor according to one or several of the claims 1 to 10, **characterized by** the following steps:
- arranging a first sensor component (31) on an adjustment device (10),
- positioning a second sensor component (30) at the first sensor component (31) at a relative position of the two sensor components (30, 31) predetermined by the three docking elements (5, 6, 7),
- aligning one or several measuring elements of the second sensor component (30) with one or several measuring elements of the first sensor component (31) so that the second sensor component (30) is pre-adjusted.

13. The method for the pre-adjustment according to claim 12, **characterized in that** several second sensor components (30) are pre-adjusted to the first sensor component (31) by means of the method, wherein the first sensor component can be combined, without further adjustment, with any arbitrary pre-adjusted second sensor component to form a functional sensor.

14. The method for the pre-adjustment according to one or a plurality of claims 12 to 13, wherein in addition to the pre-adjustment of the one or several second sensor components (30) further first sensor components (31) are pre-adjusted, with the following steps:
- arranging a second sensor component (30) on the or on a further adjustment device,
- positioning a first sensor component (31) at the second sensor component (30) at a relative position of the two sensor components (30, 31) predetermined by the docking elements (5, 6, 7),
- aligning one or several measuring elements of the first sensor component (31) with one or several measuring elements of the second sensor component (30), so that the first sensor component (31) is pre-adjusted.

## Revendications

1. Capteur destiné à l'examen de produit en feuilles, notamment de billets de banque, comprenant au moins deux composants de capteur (30, 31) prévus pour être agencés sur des côtés/faces opposés d'une voie de transport prévue pour un transport du produit en feuilles, la position relative d'au moins deux composants de capteur (30, 31) se faisant face étant fixée de telle façon par au moins un élément d'arrimage (5, 6, 7) que les composants de capteur (30, 31) se faisant face sont alignés l'un par rapport à l'autre, **caractérisé en ce**
- **que** la position relative des composants de capteur (30, 31) se faisant face est fixée par trois, notamment trois différents éléments d'arrimage (5, 6, 7) qui consistent respectivement en au moins deux éléments partiels qui se touchent, au moins un des éléments partiels étant agencé sur chacun des composants de capteur (30, 31) à aligner et ayant sur le composant de capteur (30, 31) d'en face un autre des éléments partiels qui lui est associé en tant que contre-pièce, et
- **que** les points médians des trois éléments partiels qui sont agencés sur un des composants de capteur (30, 31) peuvent être reliés par un triangle.

2. Capteur selon la revendication 1, **caractérisé en ce que** la position relative d'au moins deux des composants de capteur (30, 31) se faisant face est fixée de telle façon par les éléments d'arrimage (5, 6, 7) qu'au moins un signal de mesure émanant d'un des composants de capteur (30, 31) peut, par au moins un composant de capteur (30, 31) d'en face aligné sur ce dernier, être capté.

3. Capteur selon une ou plusieurs des revendications précédentes, **caractérisé en ce que** les éléments d'arrimage (5, 6, 7) sont réalisés de telle façon que la position relative d'au moins deux des composants de capteur (30, 31) se faisant face n'est pas surdéterminée et/ou exactement reproductible.

4. Capteur selon une ou plusieurs des revendications précédentes, **caractérisé en ce qu'**au moins un des éléments d'arrimage (5, 6, 7) est agencé sur les côtés tournés l'un vers l'autre d'au moins deux des composants de capteur (30, 31) se faisant face.

5. Capteur selon une ou plusieurs des revendications précédentes, **caractérisé en ce qu'**au moins un des éléments d'arrimage (5, 6, 7) comporte au moins deux éléments partiels (50, 51; 50', 51'; 60, 61; 60', 61'; 70, 71; 70', 71') qui ne se touchent qu'à des endroits prédéterminés.

6. Capteur selon une ou plusieurs des revendications précédentes, **caractérisé en ce que** les composants de capteur (30, 31) se faisant face sont maintenus alignés l'un par rapport à l'autre par une force de pression appliquée et qu'au moins deux des éléments partiels (50, 51; 50', 51'; 60, 61; 60', 61'; 70, 71; 70', 71') se touchant sont maintenus en contact l'un avec l'autre par la force de pression.

7. Capteur selon une des revendications précédentes, **caractérisé en ce qu'**au moins un des éléments partiels (50, 50', 60, 60', 70, 70') se touchant est attaché à un premier composant de capteur (30) et au moins un autre des éléments partiels (51, 51', 61, 61', 71, 71') se touchant est attaché à un deuxième composant de capteur (31) qui fait face au premier composant de capteur (30).

8. Capteur selon une ou plusieurs des revendications précédentes, **caractérisé en ce qu'**au moins un premier des éléments partiels (50, 50', 60, 60', 70, 70') se touchant présente, sur le côté prévu pour un attouchement avec un deuxième des éléments partiels (51, 51', 61, 61', 71, 71') se touchant, une surface bombée vers l'extérieur, ayant notamment la forme d'une boule ou d'une sphère aplatie.

9. Capteur selon une ou plusieurs des revendications précédentes, **caractérisé en ce que** chacun des trois éléments d'arrimage (5, 6, 7) comporte un premier élément partiel qui, sur sa face frontale prévue pour un attouchement avec une face frontale d'un deuxième élément partiel de l'élément d'arrimage (5, 6, 7) respectif, présente une surface bombée vers l'extérieur, ayant notamment la forme d'une boule.

10. Capteur selon la revendication 9, **caractérisé en ce que** le deuxième élément partiel (51, 51') d'un premier des trois éléments d'arrimage (5, 6, 7) présente sur sa face frontale une surface plane et que le deuxième élément partiel (71, 71') d'un deuxième des trois éléments d'arrimage (5, 6, 7) présente sur sa face frontale la forme de la surface d'enveloppe d'un cône creux ou d'un cône creux tronqué et le deuxième élément partiel (61, 61') d'un troisième des trois éléments d'arrimage (5, 6, 7) présente sur sa face frontale la forme d'un prisme creux ou d'un prisme creux tronqué.

11. Dispositif destiné à l'examen de produit en feuilles, comportant au moins un capteur selon une ou plusieurs des revendications précédentes.

12. Procédé de préajustage d'un ou de plusieurs composants de capteur d'un capteur selon une ou plusieurs des revendications de 1 à 10, **caractérisé par** les étapes suivantes:
- agencement d'un premier composant de capteur (31) sur un dispositif d'ajustage (10),
- positionnement d'un deuxième composant de capteur (30) sur le premier composant de capteur (31) en une position relative des deux composants de capteur (30, 31) prédéterminée par les trois éléments d'arrimage (5, 6, 7),
- alignement d'un ou de plusieurs éléments de mesure du deuxième composant de capteur (30) sur un ou plusieurs éléments de mesure du premier composant de capteur (31), de telle sorte que le deuxième composant de capteur (30) est préajusté.

13. Procédé de préajustage selon la revendication 12, **caractérisé en ce que** plusieurs deuxièmes composants de capteur (30) sont préajustés sur le premier composant de capteur (31) à l'aide du procédé, le premier composant de capteur pouvant, sans autre ajustage, être combiné à n'importe quel deuxième composant de capteur préajusté de manière à constituer un capteur apte à fonctionner.

14. Procédé de préajustage selon une ou plusieurs des revendications de 12 à 13, des premiers composants de capteur (31) supplémentaires étant, en plus du préajustage du un ou des plusieurs deuxièmes composants de capteur (30), préajustés, comprenant les étapes:
- agencement d'un deuxième composant de capteur (30) sur le ou sur un dispositif d'ajustage supplémentaire,
- positionnement d'un premier composant de capteur (31) sur le deuxième composant de capteur (30) en une position relative des deux composants de capteur (30, 31) prédéterminée par les éléments d'arrimage (5, 6, 7),
- alignement d'un ou de plusieurs éléments de mesure du premier composant de capteur (31) sur un ou plusieurs éléments de mesure du deuxième composant de capteur (30), de telle sorte que le premier composant de capteur (31) est préajusté.
